# EUROPEAN PATENT SPECIFICATION

(11) **EP 3 288 398 B1**
(45) Date of publication and mention of the grant of the patent: **13.03.2019**
(21) Application number: 16718707.9
(22) Date of filing: 27.04.2016
(51) Int. Cl.: A23L 27/00

(54) **ENCAPSULATION**
VERKAPSELUNG
ENCAPSULATION

(30) Priority: 29.04.2015 GB 201507559
(43) Date of publication of application: 07.03.2018
(73) Proprietor: Givaudan SA, 1214 Vernier (CH)
(72) Inventor: WITTEVEEN, Frans, 3833 CM Leusden (NL)
(74) Representative: Global Patents
(86) International application number: PCT/EP2016/059414
(87) International publication number: WO 2016/174095

(56) References cited:
- WO-A1-2013/156591
- WO-A1-2015/063130
- US-A- 5 624 612
- DATABASE WPI Week 200722 Thomson Scientific, London, GB; AN 2007-208883 XP2734835, & CN 1 864 540 A (UNIV FUJIAN AGRIC&FORESTRY) 22 November 2006 (2006-11-22)

## Description

This disclosure relates to flavour encapsulation.

The encapsulation of flavours is a very important technology, allowing, as it does, the preservation of flavour until its desired release time. This technology has found its way into a wide variety of consumable compositions, i.e., compositions taken orally, either for ingestion (such as foodstuffs, confectionery, baked goods and beverages) or for spitting out (such as toothpastes and mouthwashes).

One of the most common materials used for this application is gelatin. Gelatin has many advantages; it is cheap and readily available, it also has unique properties with respect to gelling and swelling behaviour, mouth-feel and specific melting behaviour in the mouth upon consumption. These have combined to make its use widespread.

Against these advantages, there have arisen numerous advantages. Gelatin is an animal product, thus meaning that it cannot be used in vegetarian products. In addition, depending on its source, it may involve religious prohibitions. It is hard to overcome kosher and halal prohibitions with gelatin products. However, it has proved difficult to find a substitute for gelatin that can give all its advantages without any of its disadvantages.

WO 2013/156591 describes the preparation of gelatin-free encapsulated flavours by spraying a flavour emulsion onto a dry blend of hydrocolloid and unhydrolysed pea protein.

It has now been found that it is possible to provide the benefits of gelatin without the drawbacks. This is achieved using an encapsulated flavour, comprising a core material, flavour material and a coating material, the core material comprising a finely-divided native starch, xanthan gum and konjac, the xanthan gum and konjac being present in equal weight proportions. According to the invention, a liquid comestible product comprising a comestible product base and encapsulated flavour is provided, as defined in the claims.

There is also described herein a method of preparing an encapsulated flavour, comprising the blending of a mixture of native starch, xanthan gum and konjac and a flavour emulsion to give a granulate, the xanthan gum and konjac being present in equal weight proportions..

Native starches, i.e., non-chemically-modified starches, are well-known and readily-available items of commerce. Typical examples include rice and tapioca starch.
Xanthan gum is a well-known polysaccharide secreted by the bacterium *Xanthomonas campestris,* and it is widely used as a rheology modifier, thickener and stabiliser in foodstuffs and cosmetics.
Konjac is the root of an Asian plant *Amorphophallus konjac.* It is now widely used in health and dietary foods, because of its nutritional content and its high content of glucomannan fibre, which is noted for its swelling ability. It is available in powder (flour) and gel form. The powder form is preferred for use in this process.

Although all the materials are well known to the art, it is surprising to find that the combination may be used to replace gelatin and confer on the compositions the desirable qualities of gelatin.

It is important that the konjac and xanthan gum be present in equal weight proportions in the finished encapsulated flavour. The weight proportions of the combination of the two ingredients in the encapsulated flavour can vary over a wide range, but a particular range is from 4%-16% by weight of the encapsulated flavour, that is, the individual weight proportions of konjac and xanthan gum range between 2 and 8%.

The flavour may be any suitable desired flavour. It is used in the form of an aqueous emulsion. In some cases, the flavour may be emulsified without the need for any emulsifiers, but in general the presence of at least some food-grade emulsifier is beneficial. Typical examples include gum Arabic, modified food starches and OSA starch.

In a particular embodiment, the emulsifier is derived from sorbitan. A particular embodiment is polyoxyethylene sorbitan monooleate, commercially available, for example, under the trade names Tween™, Polysorbate™ and Admul™. It has been surprisingly found that the use of these emulsifiers results in emulsifier flavour droplets of unusually small size (down to 1 micron), as opposed to the 3-4 micron size possible with other emulsifiers. The larger the droplets, the greater the flavour loss in the fluidised bed process, so a smaller size brings considerable advantages.

In a typical process, the core material is prepared by mixing the ingredients in a heated fluidised bed. The emulsion of the flavour is then sprayed on to the core material. Spraying is continued until a desired flavour content is attained. Typical fluidised bed equipment include Wurster, rotor granulator and top spray systems.

The fluidised bed equipment is operated according to the normal practices and within the recognised parameters of the art. Typical operating conditions are as follows:
Inlet temperature 60 - 110°C, particularly about 95°C
Product Temperature 35 - 90°C, particularly about 65°C
Air flow rate 20 - 140 M³/h, particularly about 60 M³/h
Nozzle air pressure 0.5 - 6 bar, particularly about 4 bar

In a further embodiment, at least one protective layer may be applied to the granulate. A protective layer may be any food-grade material capable of forming a coating film, typical examples being cellulosic materials such as methyl and ethyl cellulose, and starch-based materials. This is sprayed as an aqueous solution on to the fluidised flavour granules.

The flavour granules hereinabove described may be used in all kinds of liquid comestible products, that is, products taken by mouth either for ingestion or spitting out.

The comestible products are liquids or spreadable pastes. By "comestible product base" is meant all of the art-recognised ingredients that are combined with the encapsulated flavour to make a comestible product. These will depend on the nature of the particular product, but they include materials such as other flavours, binders and film-forming materials, thickeners, rheology modifiers, extenders and abrasive agents, solvents and diluents, pigments, dyestuffs and colouring matters, preservatives, flavour enhancers and modifiers, sweeteners, mouthfeel additives, antiseptics and medicinal compounds and compositions, and the like.
Non-limiting examples of comestible products include food products, beverages, oral care products, and compositions for admixture to such products, in particular flavour compositions. Flavour compositions may be added to processed foods during their processing, or they may actually be consumables in their own right, e.g. condiments such as sauces and the like.
Further non-limiting examples of comestible products include confectionery products such as chocolate and candy products, cereal products, baker's products, bread products, pasta products both fresh and preserved, gums, chewing gums, yeast products, salt and spice products, mustard products, vinegar products, sauces (condiments), soups, processed foods, cooked fruits and vegetable products, meat and meat products, egg products, edible oils and fat products, medicaments, food extracts, plant extracts, meat extracts, condiments, sweeteners, nutraceuticals, pharmaceutical and non-pharmaceutical gums, tablets, lozenges and drops. Beverages include tea and tea infusions (hot and cold), coffee and cocoa.
Use of the granules hereinabove described confer the possibility of having a gelatin-free product (thus meeting all the religious and dietary problems caused by the presence of gelation) with all the desirable qualities that the presence of gelatin brings. There is therefore also provided a gelatin-free solid comestible composition comprising a comestible product base and encapsulated flavour as hereinabove defined
The disclosure is further described with reference to the following non-limiting examples.

### Example 1

Preparation of particles

The ingredients are shown below:

| **Material** | **Gram** |
|---|---|
| **A** | |
| MD12¹ | 175 |
| Gum Arabic | 350 |
| Isomalt² | 175 |
| Water | 950 |
| Flavour³ | 235 |
| Admul T60K⁴ | 7 |

| **B** | |
|---|---|
| Tapioca grits | 150 |
| Xanthan | 50 |
| Konjac | 50 |

| **C** | |
|---|---|
| Methyl Cellulose | 50 |
| Water | 575 |

| | |
|---|---|
| 1 Malto Dextrine (dextrose equivalent of 12) 2 sugar alcohol 3 Comercially-available peppermint flavour 4 polyoxyethylene (20) sorbitan monooleate | |

The process was carried out in a rotor granulator operating under the following conditions (with the usual slight practical variations):

| | |
|---|---|
| Inlet temperature | 100 °C |
| Product Temperature | 55 °C |
| Air flow | 70 m3/h |
| Nozzle air pressure | 1 bar |

Two batches of materials were prepared, the first utilising Stages A and B only ("uncoated granules"), the second additionally utilising C, in which a solution of methyl cellulose is sprayed on to the granules in the fluidised bed "coated granules"). The same process conditions were maintained for both Stages B and C.

The two sets of granules were then collected and sieved to give granules of 500µM maximum.

### Example 2

### Testing of granules.

Both sets of granules were incorporated at 2% by weight into the following chewing gum formulation:

| | |
|---|---|
| sorbitol | 56.3 |
| Solsona-T¹ | 30.0 |
| mannitol | 5.0 |
| Malitol syrup² | 8.0 |
| lecithin | 0.4 |
| Aspartame² | 0.2 |
| Acesulfame-K² | 0.1 |

| | |
|---|---|
| 1. Commercially-available gum base 2. Sweeteners | |

The granules were incorporated by using a Z- blade mixer at room temperature and kneading the mix of above ingredients until a homogeneous viscous mix (paste) was formed. The viscous paste was divided in chewing pellets of 1.2 gram each.

For comparison, there was added to the same chewing gum base in the same proportion conventional spray-dried starch flavour particles, carrying the same proportion of the same flavour as those prepared in Example 1. Two different sizes of spray-dried granules were used, of maximum sizes 150 and 75µm.

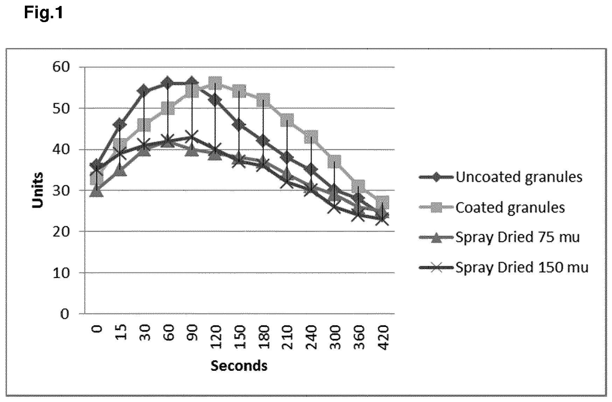

Evaluation was carried out by an expert panel of 15 members and the data statistically analysed by ANOVA. The results are shown in Figure 1.

What can clearly be seen from the Figure is that
1. The uncoated granules made as hereinabove described have a rapid and very potent "up-front" release, corresponding to the immediacy of the flavour impact after commencement of chewing;
2. The coated granules have the same impact, but it is delayed by the extra coating.
3. Both substantially outperform the known spray-dried flavour granules.

## Claims

1. A comestible product in which the product is a liquid comprising a comestible product base and encapsulated flavour, the encapsulated flavour comprising a core material, flavour material and a coating material, the core material comprising a finely-divided native starch, xanthan gum and konjac, the xanthan gum and konjac being present in equal weight proportions.

2. A comestible product according to claim 1, which is completely gelatin free.

3. A comestible product according to claim 1, in which the product is a beverage.

4. A comestible product according to claim 3 in which the product is selected from tea, tea infusions (hot and cold), coffee and cocoa.

5. A comestible product according to claim 1, according to claim 1, in which the combined proportion of xanthan gum and konjac in the encapsulated flavour is from 4-16% by weight of the encapsulated flavour.

6. A comestible product according to claim 1, in which the encapsulated flavour is prepared by blending of a mixture of native starch, xanthan gum and konjac and a flavour emulsion to give a granulate, the xanthan gum and konjac being present in equal weight proportions.

7. A comestible product according to claim 6 in which the flavour emulsion is prepared in the presence of an emulsifier.

8. A comestible product according to claim 7, in which the emulsifier is polyoxyethylene sorbitan monooleate.

## Patentansprüche

1. Lebensmittel, wobei es sich bei dem Produkt um eine eine Lebensmittelbasis und verkapselten Geschmack umfassende Flüssigkeit handelt, wobei der verkapselte Geschmack ein Kernmaterial, Geschmacksmaterial und ein Beschichtungsmaterial umfasst, wobei das Kernmaterial eine feinteilige native Stärke, Xanthan und Konjak umfasst, wobei das Xanthan und das Konjak in gleichen Gewichtsanteilen vorliegen.

2. Lebensmittel nach Anspruch 1, welches vollständig gelatinefrei ist.

3. Lebensmittel nach Anspruch 1, wobei es sich bei dem Produkt um ein Getränk handelt.

4. Lebensmittel nach Anspruch 3, wobei das Produkt aus Tee, Teeinfusionen (heiß und kalt), Kaffee und Kakao ausgewählt ist.

5. Lebensmittel nach Anspruch 1, nach Anspruch 1, wobei der kombinierte Gewichtsanteil an Xanthan und Konjak im verkapselten Geschmack 4-16 Gew.-% des verkapselten Geschmacks beträgt.

6. Lebensmittel nach Anspruch 1, wobei der verkapselte Geschmack durch Mischen einer Mischung von nativer Stärke, Xanthan und Konjak und einer Geschmacksemulsion unter Erhalt eines Granulats hergestellt wird, wobei das Xanthan und das Konjak in gleichen Gewichtsanteilen vorliegen.

7. Lebensmittel nach Anspruch 6, wobei die Geschmacksemulsion in Gegenwart eines Emulgators hergestellt wird.

8. Lebensmittel nach Anspruch 7, wobei es sich bei dem Emulgator um Polyoxyethylensorbitanmonooleat handelt.

## Revendications

1. Produit comestible, où le produit est un liquide comprenant une base de produit comestible et un arôme encapsulé, l'arôme encapsulé comprenant un matériau de coeur, un matériau d'arôme et un matériau de revêtement, le matériau de coeur comprenant un amidon natif finement divisé, de la gomme xanthane et de la gomme de konjac, la gomme xanthane et la gomme de konjac étant présentes selon des proportions pondérales équivalentes.

2. Produit comestible selon la revendication 1, qui est totalement exempt de gélatine.

3. Produit comestible selon la revendication 1, où le produit est une boisson.

4. Produit comestible selon la revendication 3, où le produit est choisi parmi le thé, les infusions de thé (chaudes et froides), le café et le cacao.

5. Produit comestible selon la revendication 1, selon la revendication 1, où la proportion combinée de gomme xanthane et de gomme de konjac dans l'arôme encapsulé est de 4-16% en poids de l'arôme encapsulé.

6. Produit comestible selon la revendication 1, où l'arôme encapsulé est préparé par le panachage d'un mélange d'amidon natif, de gomme xanthane et de gomme de konjac et d'une émulsion d'arôme afin de conduire à un granulé, la gomme xanthane et la gomme de konjac étant présentes selon des proportions pondérales équivalentes.

7. Produit comestible selon la revendication 6, où l'émulsion d'arôme est préparée en présence d'un émulsifiant.

8. Produit comestible selon la revendication 7, où l'émulsifiant est le monooléate de sorbitane polyoxyéthyléné.
